# EUROPEAN PATENT SPECIFICATION

(11) **EP 4 597 276 B1**
(45) Date of publication and mention of the grant of the patent: **28.10.2026**
(21) Application number: 23885998.7
(22) Date of filing: 13.09.2023
(51) Int. Cl.: G06F 3/041, G06F 3/01, G06V 30/18, G06V 40/18, G06F 3/0354, H04M 1/02, H04M 1/72454, G06F 1/16

(54) **ELECTRONIC DEVICE AND METHOD FOR OPERATING SAME**
ELEKTRONISCHE VORRICHTUNG UND VERFAHREN ZUM BETRIEB DAVON
DISPOSITIF ÉLECTRONIQUE ET SON PROCÉDÉ DE FONCTIONNEMENT

(30) Priority: 04.11.2022 KR 20220146392
(43) Date of publication of application: 06.08.2025
(73) Proprietor: Samsung Electronics Co., Ltd., Suwon-si, Gyeonggi-do 16677 (KR)
(72) Inventor: NGUYEN, Van Dat, Suwon-si Gyeonggi-do 16677 (KR); LE, Xuan Hoa, Suwon-si Gyeonggi-do 16677 (KR); TRAN, Huy Hung, Suwon-si Gyeonggi-do 16677 (KR); TRUONG, Dinh Khanh, Suwon-si Gyeonggi-do 16677 (KR)
(74) Representative: Appleyard Lees IP LLP
(86) International application number: PCT/KR2023/013752
(87) International publication number: WO 2024/096301

(56) References cited:
- CN-A- 114 356 147
- KR-A- 20140 046 178
- KR-A- 20150 092 962
- KR-A- 20170 043 076
- KR-B1- 101 542 129

## Description

### Technical Field

The technical concept of the present disclosure relates to an electronic device, and more particularly, to an electronic device and a method of operating the same for adaptively adjusting an occurrence angle of a touch input event.

### Background Art

Recently, a display of an electronic device including a touch panel, such as a smartphone and a tablet, has been developed in many fields related to an application using which a user directly touches a screen by using a device (e.g., a smart pen) or element, which is capable of touching a surface of a touch panel (or display panel) and drawing a picture or writing on the display according to the touch.

Displays of electronic devices have been developed into various forms, such as foldable displays and rollable displays. Accordingly, when a processing process of a touch input event applied to an existing flat display is applied to the various forms of displays described above, a significant error occurs in the processing process of input data, and thus, there is a growing need for a device for adaptively adjusting input data (e.g., an occurrence angle of a touch input event) for the touch input event generated in various forms of displays.

CN114356147A discloses a touch display panel with a bendable region and a correction method. The method compensates sensor parameters in the bent area at various angles to prevent false touch signals, ensuring accurate touch detection in foldable displays.

### Disclosure of Invention

### Solution to Problem

An electronic device according to an embodiment may include at least one sensor, memory storing one or more instructions, a display including a first panel and a second panel, the first panel and the second panel being foldable or unfoldable about a folding axis, and one or more processors.

The one or more processors according to an embodiment may be configured to execute the one or more instructions to identify a folding angle of the display by using the at least one sensor.

The one or more processors according to an embodiment may be configured to adjust an occurrence angle of a touch input event generated on the display when the display is in a folded state.

The one or more processors according to an embodiment may be configured to determine a stroke generated by the touch input event according to the adjusted occurrence angle of the touch input event.

The one or more processors according to an embodiment may be configured to display the determined stroke on the display.

A method of operating an electronic device according to an embodiment may include identifying a folding angle of a display by using at least one sensor.

The method of operating an electronic device according to an embodiment may include adjusting an occurrence angle of a touch input event generated on the display when the display is in a folded state.

The method of operating an electronic device according to an embodiment may include determining a stroke generated by the touch input event according to the adjusted occurrence angle of the touch input event.

The method of operating an electronic device according to an embodiment may include displaying the determined stroke on the display.

In the method of operating an electronic device according to an embodiment, the display may include a first panel and a second panel, and the first panel and the second panel may be foldable or unfoldable about a folding axis.

According to an embodiment, provided is a computer-readable recording medium having recorded thereon a program for executing any one of the methods by which an electronic device adaptively adjusts an occurrence angle of a touch input event.

### Brief Description of Drawings

FIG. 1A illustrates a usage state of an electronic device according to an embodiment.
FIG. 1B illustrates a folded state of a display according to an embodiment.
FIG. 2 is a diagram illustrating a stroke for each display panel in a folded state of an electronic device according to an embodiment.
FIG. 3 illustrates a method of operating an electronic device according to an embodiment.
FIG. 4 illustrates a method of operating an electronic device according to an embodiment.
FIG. 5 illustrates a process of adjusting an angle of a touch input event of a display according to an embodiment.
FIG. 6 illustrates an operation of identifying a folding angle of a display of an electronic device according to an embodiment.
FIG. 7 illustrates an operation of calculating a compensation angle for a touch input event of an electronic device according to an embodiment.
FIG. 8A illustrates another form of a display according to an embodiment.
FIG. 8B illustrates a correspondence relationship between components in another form of a display according to an embodiment.
FIG. 9 illustrates another form of a display according to an embodiment.
FIG. 10 illustrates an operation of adjusting an occurrence angle of a touch input event depending on a compensation ratio of an electronic device according to an embodiment.
FIG. 11 illustrates an operation of determining a reference plane of an electronic device according to an embodiment.
FIG. 12 illustrates an operation of determining a reference plane of an electronic device according to an embodiment.
FIG. 13 is a comparison diagram of strokes of respective panels of a display of an electronic device according to an embodiment.
FIG. 14 is a block diagram of an electronic device according to an embodiment.

### Mode for the Invention

The terms used in the specification are briefly explained, and the present disclosure is described in detail.

The terms used in the present disclosure are selected from the most widely used general terms possible while considering the functions of the present disclosure, but may vary depending on the intention of engineers in the field, precedents, the emergence of new technologies, and the like. In certain cases, there are terms arbitrarily selected by the applicant, and in such cases, their meanings are described in detail in the corresponding description of the disclosure. Therefore, the terms used in the present disclosure need to be defined based on the meaning of the terms and the overall content of the present disclosure, rather than simply the names of the terms.

Throughout the specification, unless explicitly described to the contrary, the word "comprise (include)" and variations such as "comprises (includes)" or "comprising (including)", will be understood to imply the inclusion of stated elements but not the exclusion of any other elements. The terms such as "...unit" or "module" disclosed in the specification mean units for processing at least one function or operation, which may be implemented by hardware, software, or a combination thereof.

Hereinafter, embodiments are described in detail such that those of skill in the art may easily implement the same with reference to the accompanying drawings. However, the present disclosure may be implemented in various different forms and is not limited to the embodiments described herein. To clearly explain the present disclosure in the drawings, portions that are not related to explanation are omitted, and similar portions are given similar drawing reference numerals throughout the specification.

In embodiments of the specification, an electronic device may mean a device including a processor, memory, an input module, an audio output module, a display module including at least two display panels, an audio module, a sensor module, an interface, a connection terminal, a haptic module, a camera module, a power management module, a battery, a communication module, or an antenna module.

In embodiments of the specification, a display (or display module) may visually provide information to an external side (e.g., a user) of an electronic device. The display may include, for example, a display, a holographic device, or a projector, and a control circuit for corresponding device. The display may include a touch sensor configured to detect a touch input, a pressure sensor configured to measure a magnitude of force generated by the touch input, or a sensor configured to measure an angle at which the touch input is generated. In embodiments of the specification, the display (or display module) may include at least two display panels, and the at least two display panels may be folded or unfolded about a folding axis.

In embodiments of the specification, a stroke may be output data caused by a touch input event on a display surface of an electronic device and may mean a mark such as a dot, line (or stroke), or surface displayed on the display according to the touch input.

In embodiments of the specification, a compensation angle may mean '{(occurrence angle of touch input event after adjustment) - {(occurrence angle of touch input event before adjustment)}'.

In embodiments of the specification, it is assumed that when a rotation direction of a folding angle of a display panel is counterclockwise, the folding angle is a positive angle, and when the rotation direction of the folding angle of the display panel is clockwise, the folding angle is a negative angle. However, the present disclosure is not limited thereto, and when the rotation direction of the folding angle of the display panel is counterclockwise, the folding angle may be a negative angle, and when the rotation direction of the folding angle of the display panel is clockwise, the folding angle may be a positive angle.

Hereinafter, various embodiments of the present disclosure are described with reference to the attached drawings. However, it needs to be understood that this is not intended to limit the present disclosure to a certain embodiment, but rather to encompass various modifications, equivalents, and/or alternatives of embodiments of the present disclosure.

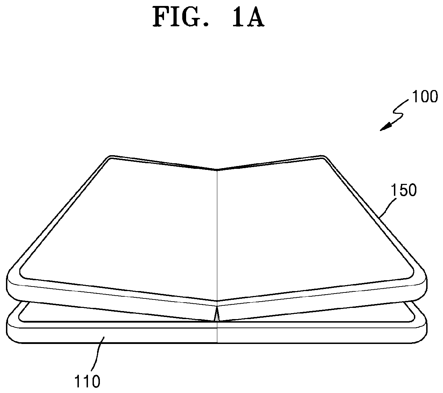

FIG. 1A illustrates a usage form 100 of an electronic device according to an embodiment.

Referring to FIG. 1A, a display of the electronic device may be used in a first form 110 or a second form 150.

In an embodiment, the electronic device may include a display including two display panels, and the two display panels may be foldable or unfoldable about a folding axis located between the display panels.

In an embodiment, the first form 110 may represent a state in which the two display panels of the electronic device are unfolded about the folding axis, and the second form 150 may represent a state in which the two display panels of the electronic device are folded about the folding axis.

Although the electronic device of FIG. 1A is illustrated as an inward foldable display in which two display panels are folded inwardly relative to a folding axis, the electronic device is not limited thereto, and the electronic device according to an embodiment of the present disclosure may also be applied to an outward foldable display in which two display panels are folded outwardly relative to the folding axis.

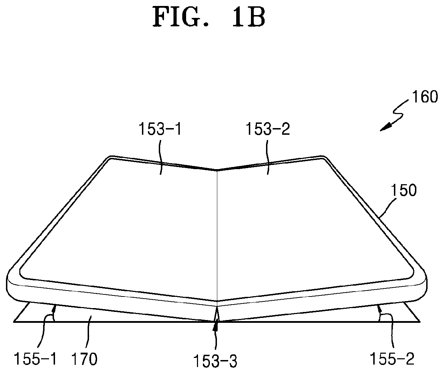

FIG. 1B illustrates a folded state 160 of a display according to an embodiment.

Referring to FIG. 1B, the display of the electronic device includes a first panel 153-1 and a second panel 153-2, and the second form 150 of the display represents a state in which the first panel 153-1 and the second panel 153-2 are folded about a folding axis 153-3 between the first panel 153-1 and the second panel 153-2. A reference plane 170 of FIG. 1B represents a plane corresponding to an unfolded state 110 of the electronic device of FIG. 1A.

In FIG. 1B, it is assumed that when the rotation direction of the folding angle of the first panel 153-1 or the second panel 153-2 is a counterclockwise direction, the first panel 153-1 or the second panel 153-2 is folded at a positive angle, and when the rotation direction of the folding angle of the first panel 153-1 or the second panel 153-2 is a clockwise direction, the first panel 153-1 or the second panel 153-2 is folded at a negative angle.

In an embodiment, when the display of the electronic device is in the second form 150, the first panel 153-1 of the display may be folded inwardly from the reference plane 170 by -x° 155-1 (the rotation direction of the folding angle of the first panel 153-1 (a direction in which a head of an arrow is pointed) is a clockwise direction, and thus, the first panel 153-1 is folded at a negative angle).

In an embodiment, when the display of the electronic device is in the second form 150, the second panel 153-2 of the display may be folded inwardly from the reference plane 170 by + y° 155-2 (the rotation direction of the folding angle of the second panel 153-2 (a direction in which a head of an arrow is pointed) is a counterclockwise direction, and thus, the second panel 153-2 is folded at a positive angle).

Although the electronic device of FIG. 1B is illustrated as an inward foldable display in which two display panels are folded inwardly relative to a folding axis, the electronic device is not limited thereto, and the electronic device according to an embodiment of the present disclosure may also be applied to an outward foldable display in which two display panels are folded outwardly relative to a folding axis.

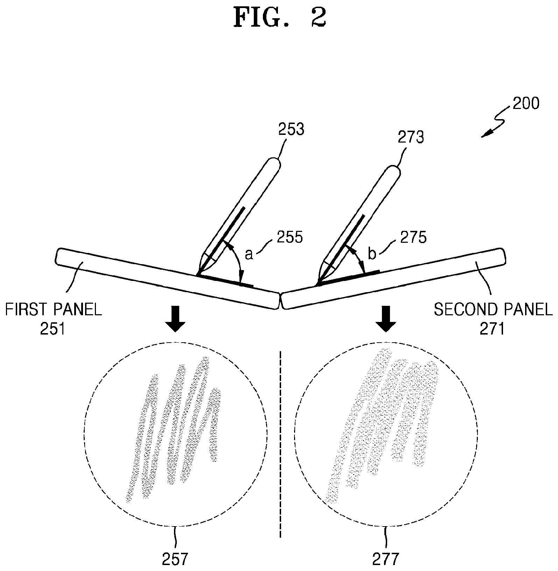

FIG. 2 is a diagram 200 illustrating a stroke for each display panel in a folded state of an electronic device according to an embodiment.

Referring to FIG. 2, the display of the electronic device may include a first panel 251 and a second panel 271. It is assumed that a first object 253 of FIG. 2 generates a first touch input event on the display of the electronic device by touching a surface of the first panel 251, and a second object 273 generates a second touch input event on the display of the electronic device by touching a surface of the second panel 271.

In an embodiment, an occurrence angle of the first touch input event may be an angle a 255 as an angle between the surface of the first panel 251 and the first object 253, and an occurrence angle of the second touch input event may be an angle b 275 as an angle between the surface of the second panel 271 and the second object 273 (hereinafter, it is assumed that a size of the angle a 255 is greater than a size of the angle b 275).

In an embodiment, the electronic device may display a first stroke 257 on the display upon identifying that the occurrence angle of the first touch input event is the angle a 255.

The electronic device may display a second stroke 277 on the display upon identifying that the occurrence angle of the second touch input event is the angle b 275.

As illustrated in FIG. 2, the first stroke 257 having a relatively large occurrence angle a 255 of the touch input event may be displayed on the display as a sharper and thinner line than the second stroke 277, and the second stroke 277 having a relatively small occurrence angle b 275 of the touch input event may be displayed on the display as a grainier and thicker line than the first stroke 257.

As illustrated in FIG. 2, the electronic device (e.g., a foldable electronic device) including at least two display panels may have an occurrence angle of a touch input event generated on surfaces of the display panels, which may be distorted due to the folding angle of each of the display panels (e.g., the first panel 251 or the second panel 271) when the display is folded.

As a result, the electronic device has a problem in that there is a deviation between strokes on display panels even within the same display, or a stroke corresponding to a touch input is not displayed on a certain display panel, which degrades performance on the display (e.g., drawing or writing performance).

When a user manually adjusts the folding angle of each of the display panels, a movement of the user is limited when the display panels are folded, and thus it is difficult to make actual adjustment to the occurrence angle of the touch input event.

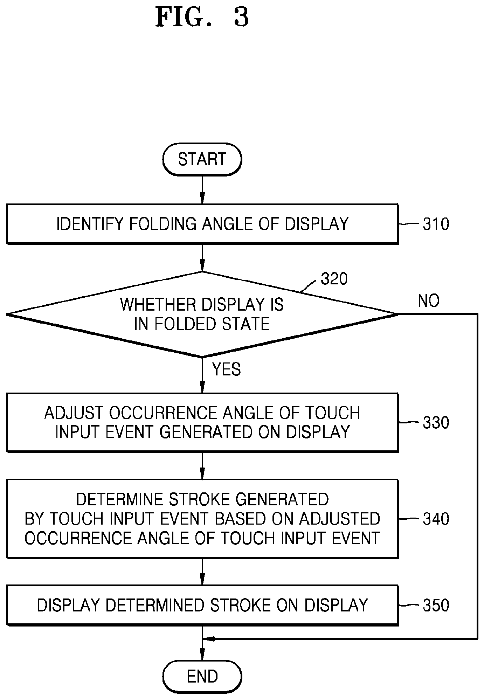

According to an embodiment of the present disclosure, a method of operating an electronic device for reducing a deviation between strokes displayed on different display panels and improving a user experience of using the device by adaptively adjusting an occurrence angle of a touch input event by using a reference plane when the display is in a folded state will be described with reference to FIG. 3 below.

FIG. 3 illustrates a method of operating an electronic device according to an embodiment.

In detail, FIG. 3 is a diagram for explaining an operation method for adaptively adjusting an occurrence angle of a touch input event by using a reference plane in a folded state of a display by a processor of an electronic device.

The electronic device of FIG. 3 may include at least two display panels, and the at least two display panels may be folded or unfolded about a folding axis.

Referring to FIG. 3, an operation for adaptively adjusting an occurrence angle of a touch input event may include operations 310, 320, 330, 340, and 350.

In operation 310, the processor may identify a folding angle of the display.

In an embodiment, the processor may identify a folding angle of each of a plurality of display panels by using at least one sensor.

In an embodiment, the folding angle of the display may mean an angle between a surface of one of the plurality of display panels and a reference plane.

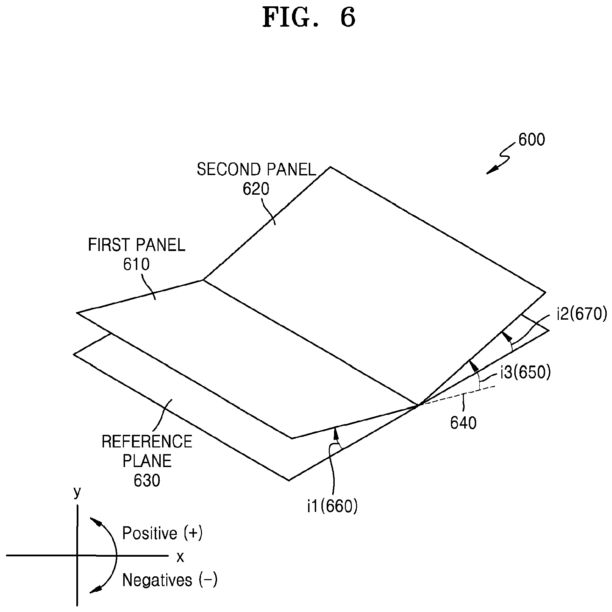

In an embodiment, when a rotation direction of the folding angle of the display is counterclockwise, the folding angle may be a positive angle, and when the rotation direction of the folding angle of the display is clockwise, the folding angle may be a negative angle. An operation of identifying the folding angle for each display panel is described with reference to FIG. 6 below.

In operation 320, the processor may identify whether the display is in a folded state.

In an embodiment, the processor may identify whether the display is folded based on the folding angle of each of the plurality of display panels.

For example, the processor may identify the display as being in a folded state when a folding angle of at least one of the display panels is greater than or equal to a threshold value.

For example, the processor may identify the display as not being in a folded state (e.g., unfolded state) when a folding angle of at least one panel of the display panels is less than a threshold value.

In an embodiment, when the display is identified as being in a folded state, the processor may perform operation 330.

In an embodiment, when the display is identified as not being in a folded state, the processor may identify the panels of the display as being in an unfolded state.

In operation 330, the processor may adjust the occurrence angle of the touch input event generated on the display.

In an embodiment, the processor may calculate a compensation angle for a touch input event generated on the display panel by using a reference plane of the display.

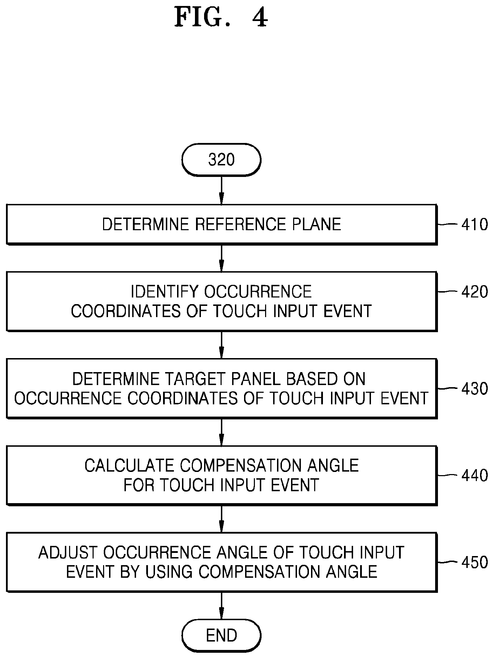

In an embodiment, the processor may adjust the occurrence angle of the touch input event by using the compensation angle. This is described below in detail with reference to FIGS. 4 to 7.

In operation 340, the processor may determine a stroke generated by a touch input event based on an adjusted occurrence angle of the touch input event.

In an embodiment, a stroke may be generated by a touch input event on a display panel of an electronic device and the stroke (e.g., a type of stroke) may be determined based on the occurrence angle of the touch input event.

For example, when the occurrence angle of the touch input event is relatively large, the processor may determine the stroke generated by the touch input event to be a type expressed as a thin and dense stroke.

For example, when the occurrence angle of the touch input event is relatively small, the processor may determine the stroke generated by the touch input event to be a type expressed as a thick and opaque stroke or a thick and grainy stroke.

In operation 340, the processor may display the determined stroke on the display.

In an embodiment, the processor may display, as output data, a stroke corresponding to the adjusted occurrence angle of the touch input event on the display.

In an embodiment, a stroke on the display may be displayed as a thin and dense stroke on the display as the occurrence angle of the touch input event increases, and the stroke on the display may be displayed as a thick and opaque or grainy stroke as the occurrence angle of the touch input event decreases.

In an embodiment, the processor may learn based on an adjusted occurrence angle of the touch input event and display a stroke caused by the touch input event based on the occurrence angle of the touch input event, which is adjusted based on an algorithm or machine learning model generated as a result of the learning.

FIG. 4 illustrates a method of operating an electronic device according to an embodiment.

In detail, FIG. 4 is a diagram for specifically explaining an operation of adjusting the occurrence angle of the touch input event generated on the display in operation 330 of FIG. 3.

The electronic device of FIG. 4 may include at least two display panels, and the at least two display panels may be folded or unfolded about a folding axis.

Referring to FIG. 4, an operation for adaptively adjusting the occurrence angle of the touch input event may include operations 410, 420, 430, 440, and 450.

In operation 410, the processor may determine a reference plane.

In an embodiment, the processor may determine a plane corresponding to an unfolded state of the display panels about the folding axis (e.g., two display panels unfolded flat about the folding axis) as the reference plane by using the folding angle of each of the display panels to adjust the occurrence angle of the touch input event. A detailed embodiment thereof is described below with reference to FIG. 6.

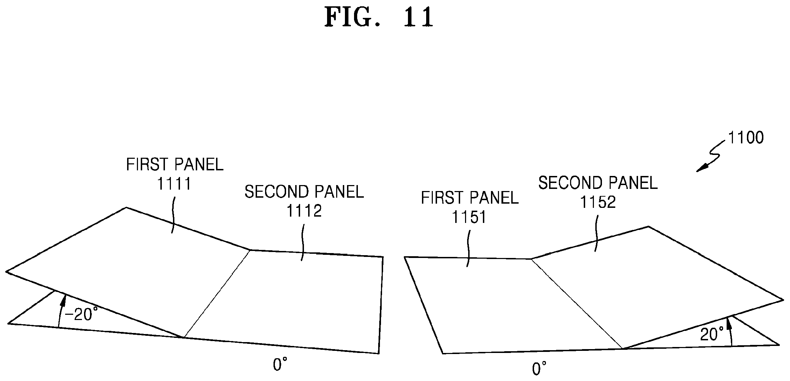

In an embodiment, the processor may determine the reference plane of the electronic device by using at least one sensor (e.g., a gyroscope sensor). A detailed embodiment thereof is described below with reference to FIG. 11.

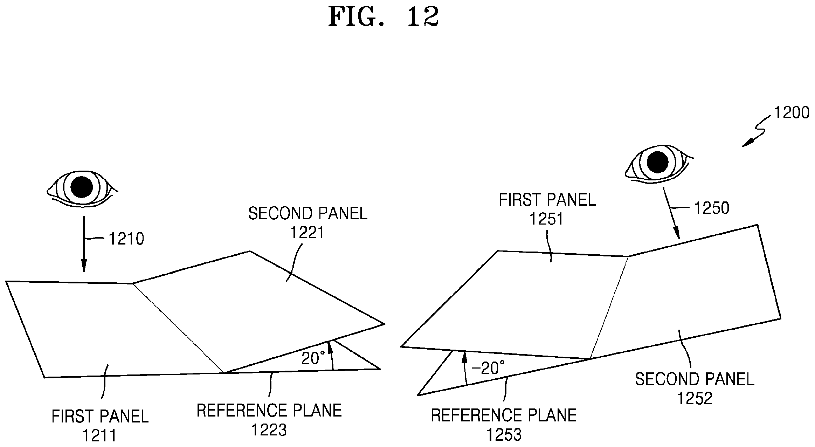

In an embodiment, the processor may sense a user's gaze to determine the reference plane of the electronic device. A detailed embodiment thereof is described below with reference to FIG. 12.

In operation 420, the processor may identify occurrence coordinates of the touch input event.

In an embodiment, the processor may identify the occurrence coordinates of the touch input event by detecting a touch input in contact with a surface of the display panel by using at least one sensor.

In an embodiment, the occurrence coordinates of the touch input event may be used to identify a target panel on which the touch input event is generated from among the display panels or identify an angle at which the target panel is tilted from a reference plane (e.g., a folding angle of the target panel).

In operation 430, the processor may determine the target panel based on the occurrence coordinates of the touch input event.

In an embodiment, the processor may determine, as a target panel, a display panel containing the occurrence coordinates of the touch input event from among at least two display panels.

In operation 440, the processor may calculate a compensation angle for the touch input event.

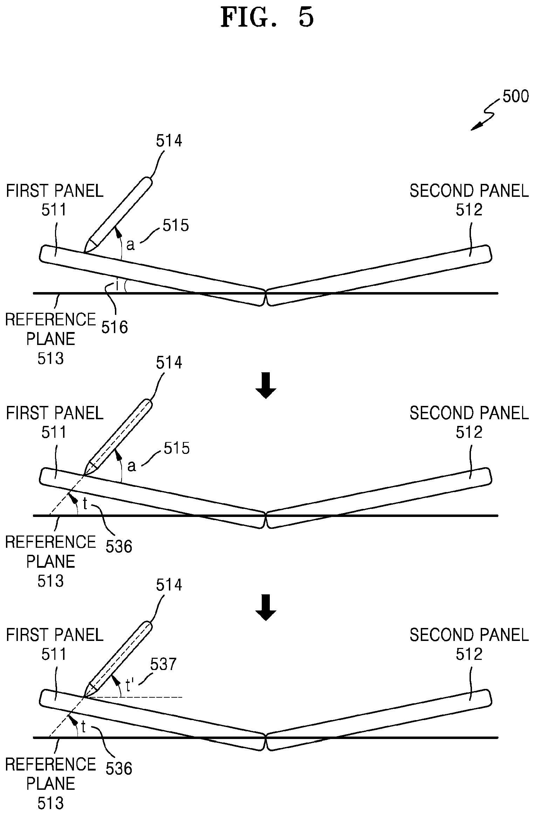

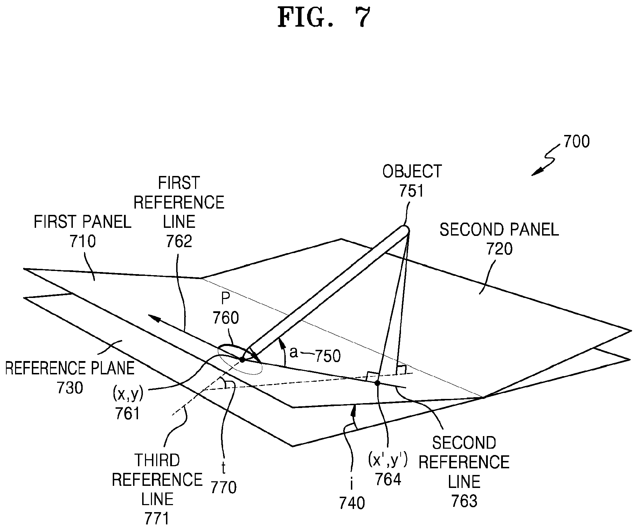

In an embodiment, the compensation angle may be calculated based on at least one of an angle between an object that generates the touch input event and a surface of the target panel, a plane angle of the touch input event measured by determining the occurrence coordinates of the touch input event as an origin on a plane including the surface of the target panel, or a folding angle of the target panel. A detailed embodiment thereof is described below with reference to FIGS. 5 and 7.

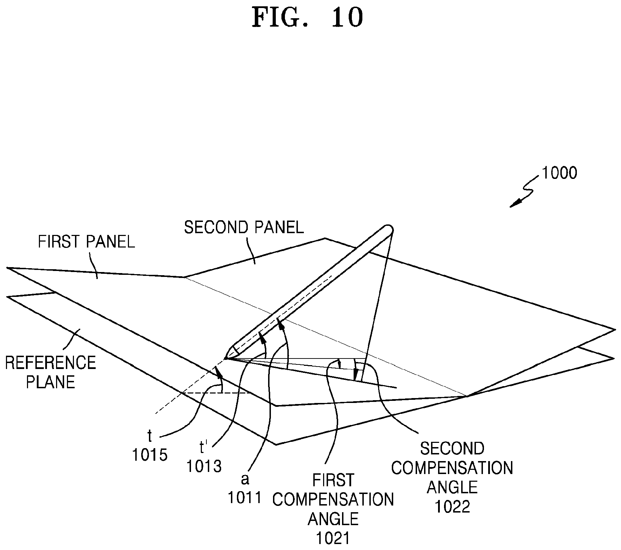

In an embodiment, the processor may determine a compensation ratio based on a folding angle between the target panel and the reference plane and determine a compensation angle based on the determined compensation ratio. A detailed embodiment thereof is described below with reference to FIG. 10.

In operation 450, the processor may adjust the occurrence angle of the touch input event by using the compensation angle.

In an embodiment, the processor may adjust the occurrence angle of the touch input event by adding the compensation angle to the occurrence angle of the touch input event before adjustment. In this case, other properties of the touch input event, such as the occurrence coordinates, occurrence pressure, and occurrence orientation of the touch input event, may be maintained.

The processor of the electronic device according to an embodiment of the present disclosure may effectively process a stroke generated by the touch input event by adaptively adjusting the occurrence angle of the touch input event by using the compensation angle calculated based on a folding angle and a reference plane of each of a plurality of display panels, thereby improving the performance of a display including a plurality of display panels.

FIG. 5 illustrates a process of adjusting an angle of a touch input event of a display according to an embodiment.

In detail, FIG. 5 is a diagram for generally explaining a process 500 in which an electronic device determines a reference plane and a target panel and adjusts an occurrence angle of a touch input event by using a calculated compensation angle.

Referring to FIG. 5, it is assumed that an object 514 and a first panel 511 are in contact with each other while the display panel of the electronic device is in a folded state. In this case, it is assumed that the occurrence angle of the touch input event caused by contact (e.g., touch input) between the object 514 and the first panel 511 is an angle a 515.

In an embodiment, the electronic device may identify a folding angle i 516 of the first panel 511 of the display by using at least one sensor. The folding angle i 516 may refer to an angle between the first panel 511 of the display and a reference plane 513.

In an embodiment, the electronic device may identify whether the display is in a folded state based on the folding angle i 516.

In an embodiment, the electronic device may determine the reference plane 513 based on the folding angle i 516 when the display is identified as being in a folded state. For example, the reference plane 513 may be a plane corresponding to a state in which the first panel 511 and a second panel 512 of the display are unfolded in opposite directions about the folding axis.

In an embodiment, the electronic device may obtain the occurrence coordinates of the touch input event by identifying an occurrence location of the touch input event by using at least one sensor.

In an embodiment, the electronic device may determine, as a target panel, a panel of a plane containing the occurrence coordinates of the touch input event.

For example, the electronic device may identify the occurrence coordinates of the touch input event of the object 514 and determine the first panel 511 as a target panel based on the identified occurrence coordinates.

In an embodiment, the electronic device may determine an angle t 536 for adjusting the occurrence angle of the touch input event based on the reference plane 513. The angle t 536 may mean an angle between the reference plane 513 and the object 514 (or an extension of the object 514).

In an embodiment, the electronic device may adjust an existing occurrence angle a 515 of a touch input event to correspond to the angle t 536.

For example, the electronic device may adjust the existing occurrence angle a 515 of the touch input event to correspond to an angle t 536, and as a result, the adjusted occurrence angle of the touch input event may be an angle t' 537. The angle t' 537 may mean an angle between an imaginary plane parallel to the reference plane 513 and the object 514.

In an embodiment, the electronic device may correct for distortion of the occurrence angle of the touch input event generated by a folded state of the target panel (e.g., the first panel 511) and resulting distortion of a stroke on the display by adjusting the occurrence angle of the touch input event to the angle t' 537.

FIG. 6 illustrates an operation of identifying a folding angle of a display of an electronic device according to an embodiment.

In detail, FIG. 6 is a diagram 600 for specifically explaining an operation of identifying the folding angle of the display in operation 310 of FIG. 3.

Referring to FIG. 6, it is assumed that the display of the electronic device includes a first panel 610 and a second panel 620, and the first panel 610 and the second panel 620 are in a folded state.

As illustrated in FIG. 6, it is assumed that when the rotation direction of the folding angle of the display panel is counterclockwise, the folding angle is a positive angle, and when the rotation direction of the folding angle of the display panel is clockwise, the folding angle is a negative angle.

In an embodiment, the electronic device may identify that the first panel 610 is tilted -i1 degrees 660 from a reference plane 630 by using at least one sensor and determine the folding angle of the first panel 610 as -i1 degrees 660.

In an embodiment, the electronic device may identify that the second panel 620 is tilted +i2 degrees 670 from the reference plane 630 by using at least one sensor and determine the folding angle of the second panel 620 as +i2 degrees 670.

In an embodiment, when the display panels of the electronic device are structured to be symmetrically folded about the folding axis, the electronic device may identify the total folding angle of the first panel 610 and the second panel 620 as +i3 degrees 650 by using at least one sensor, calculate i1 degrees 660 as '-i1 = -(i3)/2', and calculate i2 degrees 670 as '+i2 = +(i3)/2'.

FIG. 7 illustrates an operation of calculating a compensation angle for a touch input event of an electronic device according to an embodiment.

In detail, FIG. 7 is a diagram 700 for specifically explaining an operation of calculating the compensation angle for the touch input event generated on the target panel in operation 430 of FIG. 4.

Referring to FIG. 7, it is assumed that the display of the electronic device includes a first panel 710 and a second panel 720 and that the first panel 710 and the second panel 720 are in a folded state. A reference plane 730 of FIG. 7 is assumed to be a plane in which the first panel 710 and the second panel 720 are unfolded flat about the folding axis. It is assumed that the target panel in FIG. 7 is the first panel.

As illustrated in FIG. 7, a first reference line 762 may represent a reference line (or coordinate axis) orthogonal to 'x' of occurrence coordinates (x, y) 761 of the touch input event on a plane of the target panel on which a touch input is generated, and a second reference line 763 may represent a reference line connecting the occurrence coordinates (x, y) 761 and (x', y') 764 of the touch input event (here, (x', y') 764 may mean coordinates of a point at which the target panel intersects with an imaginary line that is orthogonal to the target panel from an end of an object 751 (e.g., an opposite end of a portion that is in contact with the target panel)). A third reference line 771 may mean a line representing an inclination of the object 751 with respect to the reference plane.

In an embodiment, an angle i 740 may represent a degree to which a target panel (e.g., the first panel 710) is tilted from a reference plane (or the size of the tilted angle).

In an embodiment, an angle a 750 may represent an angle between the first reference line 762 and the second reference line 763. For example, the electronic device may measure the size of the angle a 750 by measuring an angle of rotation clockwise with respect to the first reference line 762 by using at least one sensor.

In an embodiment, an angle p 760 may represent a non-adjusted occurrence angle of a touch input event as an angle between the object 751 and the target panel (e.g., the first panel 710).

For example, the electronic device may measure the angle p 760 by measuring an angle between the object 751 and the second reference line 763 by using at least one sensor.

For example, the electronic device may identify the occurrence orientation of the touch input event by using the angle p 760.

In an embodiment, an angle t 770 may represent an adjusted occurrence angle of a touch input event as an angle between the reference plane 730 and the third reference line 771.

In an embodiment, the electronic device may calculate a size of an angle (hereinafter referred to as a compensation angle) for adjusting the occurrence angle of the touch input event and adjust the occurrence angle of the touch input event by compensating for the calculated compensation angle.

In an embodiment, the electronic device may calculate the adjusted occurrence angle of the touch input event based on Equation 1 below. [Equation 1] $sin \left(t\right) = abs \left(sin\left(i\right)∗sin\left(p\right)∗cos\left(a\right)+cos\left(i\right)∗sin\left(a\right)\right)$

Here, t may be a variable corresponding to the angle t 770 and may represent an adjusted occurrence angle of a touch input event as the angle between the reference plane 730 and the third reference line 771, i may be a variable corresponding to the angle i 740 and may represent a degree to which the target panel is tilted from a reference plane (or the size of the tilted angle), and a may be a variable corresponding to the angle a 750 and may represent a non-adjusted occurrence angle of the touch input event as the angle between the first reference line and the second reference line.

In an embodiment, the electronic device may calculate an angle difference between the adjusted occurrence angle t 770 of the touch input event and the non-adjusted occurrence angle p 760 of the touch input event as a size of the compensation angle. For example, the electronic device may calculate the size of the compensation angle based on an occurrence inclination and occurrence orientation of the touch input event, and a degree to which the target panel is tilted.

In an embodiment, the electronic device may calculate the compensation angle based on a size of a plane angle p 760 of the touch input event, the occurrence orientation of the touch input event, and a folding angle i 740 of the target panel (the first panel 710), which are measured by determining occurrence coordinates (x, y) 761 of the touch input event as an origin on a plane containing a surface of the target panel (the first panel 710).

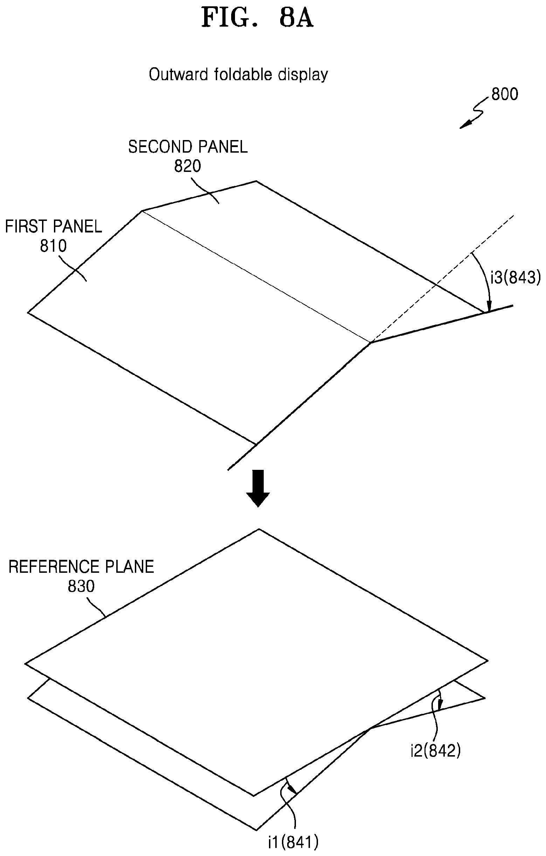

FIG. 8A illustrates another form of a display according to an embodiment.

Referring to FIG. 8A, according to an embodiment of the present disclosure, a form 800 of an outward foldable display in which display panels are folded outwardly is illustrated.

In the outward foldable display of FIG. 8A, when a rotation direction of a folding angle of the display panel is counterclockwise, the folding angle may have a positive angle, and when the rotation direction of the folding angle of the display panel is clockwise, the folding angle may be a negative angle.

In an embodiment, the outward foldable display of the electronic device may include a first panel 810 and a second panel 820, and the first panel 810 and the second panel 820 may be folded or unfolded outwardly about a folding axis.

In an embodiment, a reference plane 830 may mean a plane in which the first panel 810 and the second panel 820 are unfolded flat about the folding axis.

In an embodiment, the electronic device may measure folding angles of the first panel 810 and the second panel 820 based on the reference plane 830. The folding angle of the first panel 810 may represent a degree to which the first panel 810 is tilted from the reference plane 830, and the folding angle of the second panel 820 may represent a degree to which the second panel 820 is tilted from the reference plane 830.

In an embodiment, the electronic device may identify the folding angle of the first panel 810 of the outward foldable display as an angle i1 (e.g., '-i1 degrees') 841 and the folding angle of the second panel 820 as angle i2 (e.g., '+i2 degrees') 842.

In an embodiment, based on the first panel 810, the total folding angle i3 843 of the display panel -i3/2 may be the sum of an angle i1 841 and an angle i2 842, a size of the angle i1 841 may be '-i3/2' and the size of the angle i2 842 may be '+i3/2'.

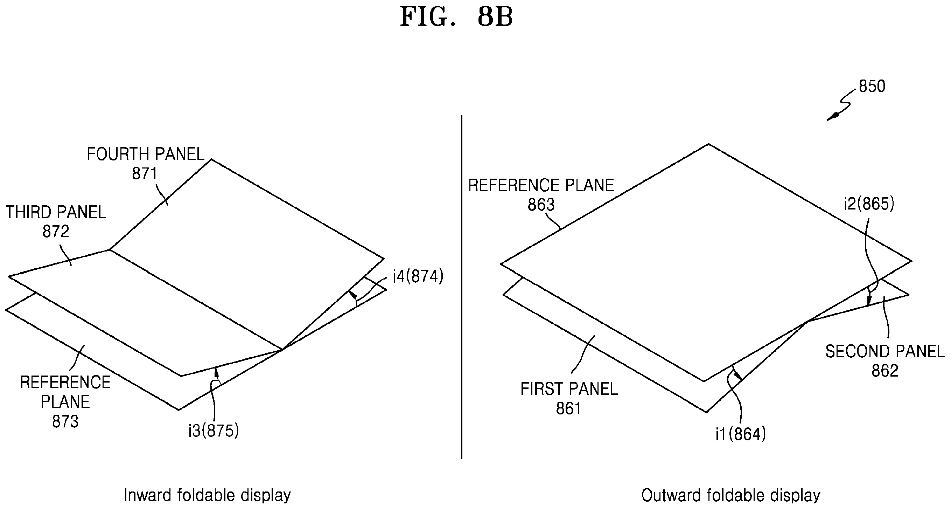

FIG. 8B illustrates a correspondence relationship between components in another form of a display according to an embodiment.

Referring to FIG. 8b, a correspondence relationship 850 between components of an inward foldable display and an outward foldable display according to an embodiment of the present disclosure is illustrated.

In the outward foldable display of FIG. 8B, when a rotation direction of a folding angle of the display panel is counterclockwise, the folding angle may be a positive angle, and when the rotation direction of the folding angle of the display panel is clockwise, the folding angle may be a negative angle.

In an embodiment, a first panel 861 of the outward foldable display may correspond to a fourth panel 871 of the inward foldable display, and a second panel 862 of the outward foldable display may correspond to a third panel 872 of the inward foldable display.

In an embodiment, a reference plane 863 of the outward foldable display may correspond to a reference plane 873 of the inward foldable display.

In an embodiment, a folding angle i1 864 of the first panel 861 of the outward foldable display may correspond to a folding angle i4 874 of the fourth panel 871 of the inward foldable display, and a folding angle i2 865 of the second panel 862 of the outward foldable display may correspond to i3 875 of the third panel 872 of the inward foldable display. For example, the outward foldable display and the inward foldable display may be reversed left and right.

As illustrated in FIGS. 8A and 8B, a method of adjusting an occurrence angle of a touch input event of an electronic device according to an embodiment of the present disclosure is applicable to an outward foldable display or an inward foldable display.

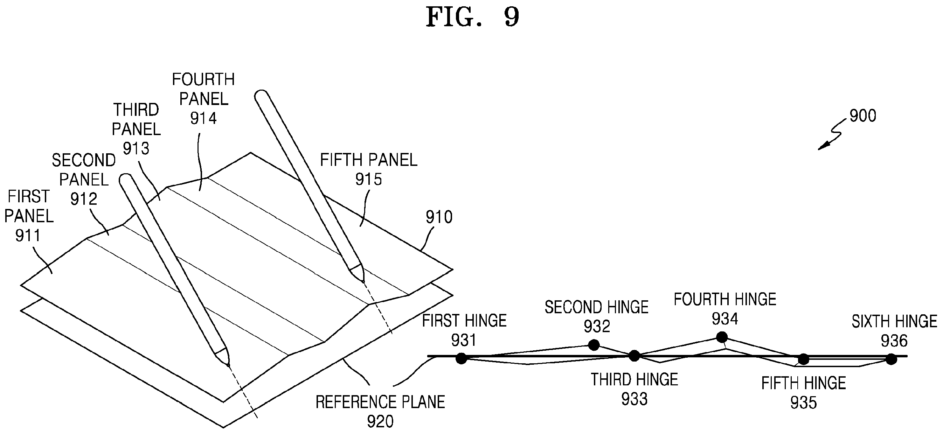

FIG. 9 illustrates another form of a display according to an embodiment.

FIG. 9 illustrates a form 900 of a multi-hinge foldable display (or multi-hinge display) in which a plurality of display panels (e.g., at least two display panels) are folded inwardly and outwardly according to an embodiment of the present disclosure.

A first form 910 of the multi-hinge foldable display (or multi-hinge display) of FIG. 9 is a form viewed from the top of the multi-hinge foldable display, and a second form 930 is a form viewed from the side of the multi-hinge foldable display.

In an embodiment, the multi-hinge foldable display may include a first panel 911, a second panel 912, a third panel 913, a fourth panel 914, and a fifth panel 915, and include a first hinge 931, a second hinge 932, a third hinge 933, a fourth hinge 934, a fifth hinge 935, and a sixth hinge 936 between the first panel 911 and the fifth panel 915 of the multi-hinge foldable display.

For example, the first hinge 931 may refer to a starting point of the first panel 911, the second hinge 932 may refer to a folding point between the first panel 911 and the second panel 912, the third hinge 933 may refer to a folding point between the second panel 912 and the third panel 913, the fourth hinge 934 may refer to a folding point between the third panel 913 and the fourth panel 914, the fifth hinge 935 may refer to a folding point between the fourth panel 914 and the fifth panel 915, and the sixth hinge 936 may refer to an end point of the fifth panel 915.

In an embodiment, the electronic device may determine a reference plane 920 based on locations of the first hinge 931 to the sixth hinge 936 and a folding angle of each of the first panel 911 to the fifth panel 915 (e.g., using a linear regression method).

As illustrated in FIG. 9, a method of adjusting an occurrence angle of a touch input event of an electronic device according to an embodiment of the present disclosure is applicable to a multi-hinge foldable display.

FIG. 10 illustrates an operation of adjusting an occurrence angle of a touch input event depending on a compensation ratio of an electronic device according to an embodiment.

FIG. 10 is a diagram for explaining an example 1000 of an electronic device partially adjusting an occurrence angle of a touch input event through a compensation ratio for the occurrence angle of the touch input event according to an embodiment of the present disclosure.

An angle a 1011 of FIG. 10 may represent a non-adjusted occurrence angle of a touch input event, an angle t 1013 may represent an angle between a reference plane and an object (i.e., a desired occurrence angle of a touch input event), and an angle t' 1015 may represent an occurrence angle of a touch input event, which is adjusted based on the angle t 1013.

In an embodiment, the electronic device may partially adjust the occurrence angle of the touch input event by using the compensation ratio.

In an embodiment, the electronic device may partially adjust the occurrence angle of the touch input event through the compensation ratio based on Equation 2 below. [Equation 2] 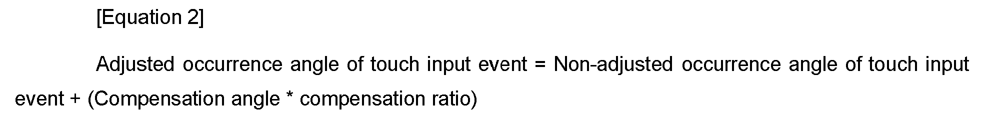 Adjusted occurrence angle of touch input event = Non-adjusted occurrence angle of touch input event + (Compensation angle * compensation ratio)

Here, the compensation angle may mean an angle that needs to be compensated for the non-adjusted occurrence angle of the touch input event based on the reference plane. The compensation ratio may range from '0.0' to '1.0'.

In an embodiment, a compensation ratio of 0.0 may mean that the occurrence angle of the touch input event is not adjusted by the electronic device, a compensation ratio of greater than 0.0 and less than 1.0 may mean that the occurrence angle of the touch input event is partially adjusted by the electronic device, and a compensation ratio of 1.1 may mean that the occurrence angle of the touch input event is exactly adjusted by the electronic device.

For example, the electronic device may partially adjust the occurrence angle of the touch input event based on a first compensation angle 1021 when the compensation ratio is 0.5.

For example, the electronic device may partially adjust the occurrence angle of the touch input event based on a second compensation angle 1022 when the compensation ratio is 0.0.

In an embodiment, the compensation ratio may be determined as a ratio value that varies depending on a folding angle.

FIG. 11 illustrates an operation of determining a reference plane of an electronic device according to an embodiment.

FIG. 11 is a diagram for explaining an operation 1100 of determining a reference plane by using at least one sensor (e.g., a gyroscope sensor) of an electronic device according to an embodiment.

In FIG. 11, it is assumed that one of the display panels of the electronic device (e.g., a second panel 1112 or a first panel 1151) is in contact with the ground.

In an embodiment, when the second panel 1112 is in contact with the ground, the electronic device may determine the second panel 1112 having a rotation angle of 0 degrees with respect to the horizontal plane as a reference plane by using a gyroscope sensor and identify a folding angle of a first panel 1111 as +20 degrees based on the determined reference plane.

In an embodiment, when the first panel 1151 is in contact with the ground, the electronic device may determine the first panel 1151 having a rotation angle of 0 degrees with respect to the horizontal plane as a reference plane by using a gyroscope sensor and identify a folding angle of the second panel 1152 as -20 degrees based on the determined reference plane.

FIG. 12 illustrates an operation of determining a reference plane of an electronic device according to an embodiment.

FIG. 12 is a diagram for explaining an operation 1200 of determining a reference plane by detecting a user's gaze by using at least one sensor of an electronic device according to an embodiment.

In an embodiment, the electronic device may estimate a viewing angle by detecting the user's gaze and determine a plane with a viewing angle of 90 degrees as a reference plane. The viewing angle may refer to an angle between the user's gaze and the display panel. For example, the electronic device may determine a display panel including a plane orthogonal to the user's gaze as a reference plane.

In an embodiment, when a direction of the user's gaze is a first direction 1210, the electronic device may determine a first panel 1211 orthogonal to the first direction 1210 as a reference plane 1223 and identify a folding angle for a second panel 1221 as +20 degrees based on the reference plane 1223.

In an embodiment, when a direction of the user's gaze is a second direction 1250, the electronic device may determine a second panel 1252 orthogonal to the second direction 1250 as a reference plane 1253 and identify a folding angle for a first panel 1251 as -20 degrees based on the reference plane 1253.

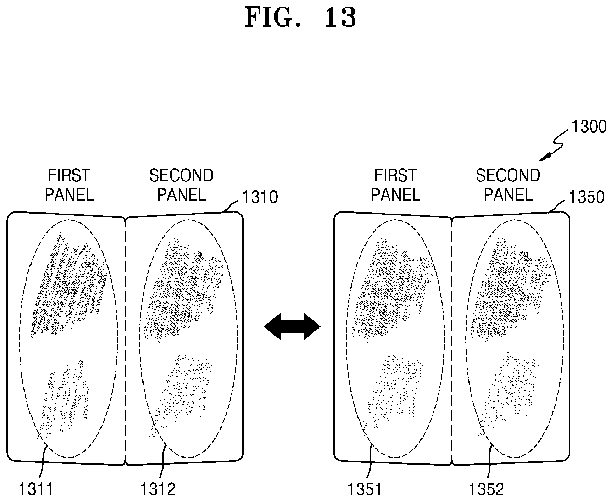

FIG. 13 is a comparison diagram of strokes of respective panels of a display of an electronic device according to an embodiment.

FIG. 13 is a comparison diagram 1300 of strokes of the respective panels between a first electronic device 1310 that does not adjust an occurrence angle of a touch input event and a second electronic device 1350 that adjusts an occurrence angle of a touch input event.

In FIG. 13, it is assumed that each of the first electronic device 1310 and the second electronic device 1350 includes a first panel and a second panel and that a stroke is generated while the first panel and the second panel of each of the first electronic device 1310 and the second electronic device 1350 are folded about the folding axis. It is assumed that the strokes generated on the first electronic device 1310 and the second electronic device 1350 of FIG. 13 are generated under the same condition except for adjustment of the occurrence angle of the touch input event.

In an embodiment, in the case of the first electronic device 1310, the occurrence angle of the touch input event may be distorted due to the folding angles of the first panel and the second panel of the first electronic device 1310 even in the same display panel. Accordingly, a stroke 1311 of the first panel of the first electronic device 1310 may be generated as a thinner and darker stroke compared with the second panel of the first electronic device 1310, while a stroke 1312 of the second panel of the first electronic device 1310 may be generated as a thick, opaque, and grainy stroke.

In embodiment, in the case of the second electronic device 1350, the second electronic device 1350 may correct distortion of the occurrence angle of the touch input event, which is caused by folding angles of panels of the second electronic device 1350 by using the reference plane and the folding angles of the panels. Accordingly, a stroke 1351 of the first panel of the second electronic device 1350 and a stroke 1352 of the second panel of the second electronic device 1350 may be generated as strokes of the same thickness, the same opacity, and the same texture.

According to an embodiment of the present disclosure, a method of operating an electronic device for reducing an unexpected deviation between strokes displayed on different display panels and improving a user experience of using the display by adaptively adjusting an occurrence angle of a touch input event by using a reference plane even when the display panel is in a folded state will be described.

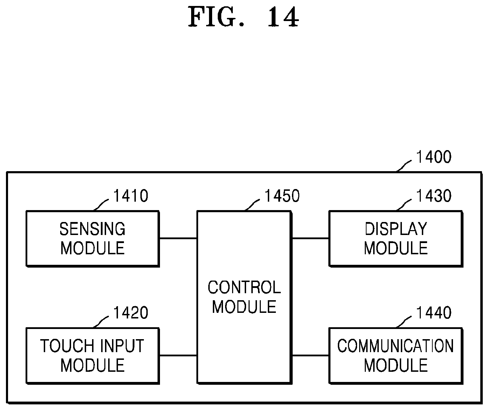

FIG. 14 is a block diagram of an electronic device according to an embodiment.

Referring to FIG. 14, each component of an electronic device 1400 according to an embodiment of the present disclosure is described in detail. The electronic devices of FIGS. 1 to 13 may correspond to the electronic device 1400 of FIG. 14.

First, the electronic device 1400 according to an embodiment of the present disclosure may include at least two display panels, and the display panels may be folded or unfolded about a folding axis. The electronic device 1400 may be a device that controls an occurrence angle of a touch input event generated on a surface of the display panel by using the reference plane and the folding angles of the display panels.

As illustrated in FIG. 14, the electronic device 1400 according to an embodiment of the present disclosure may include a sensing module 1410, a touch input module 1420, a display module 1430, a communication module 1440, and a control module 1450.

The sensing module 1410 may include one or more sensors and detect various information for determining a state of a user, a state of the electronic device 1400, and a state of a surrounding environment. For example, the sensing module 1410 may sense state information of the user. The state information of the user may include at least one of information related to movement of the user, information related to a location of the user, and information related to a biosignal of the user.

For example, the sensing module 1410 may detect a touch input event generated by a user, or an external object (or external device) (e.g., a smart pen) or element, which is capable of being in contact with a surface of the display panel of the display module 1430.

For example, the sensing module 1410 may measure the occurrence location, occurrence coordinates, occurrence angle, and occurrence orientation of a touch input event that is generated on the display panel of the display module 1430.

For example, the sensing module 1410 may detect a user's gaze and measure a viewing angle of the user.

For example, the sensing module 1410 may detect the location of the electronic device 1400 and identify a horizontal plane at the detected location. For example, the sensing module 1410 may include a gyroscope sensor to identify a horizontal plane at the detected location.

For example, the sensing module 1410 may detect a tilted or folded state of the display module 1430 of the electronic device 1400 and identify (or measure) the tilted or folding angle.

The touch input module 1420 may receive a touch input from the user.

The touch input module 1420 may detect an input obtained when the user touches the touch input module 1420 by using a pointing object. Here, the pointing object refers to a tool for actually touching or near-touching a touch panel. An example of the pointing object may include a stylus pen, a smart pen, and a finger.

According to an embodiment, the touch input module 1420 provided in the electronic device 1400 may be configured to detect not only a user real-touch but also a proximity touch to the touch input module 1420.

The touch input module 1420 according to an embodiment may receive a touch input by the pointing object. The touch input may mean an operation in which the user touches the touch input module 1420 by using the pointing object and then does not move for a certain period of time. For example, the electronic device 1400 may determine that a touch input is received when a touch to the touch input module 1420 continues to be detected for several tens to several hundreds of milliseconds (ms).

The control module 1450 controls the overall operation of the electronic device 1400.

According to an embodiment, when receiving a touch input from the touch input module 1420, the control module 1450 may control the sensing module 1410 to measure the folding angles of the display panels of the display module.

According to an embodiment, the control module 1450 may identify whether the display panels are folded based on the folding angles of the display panels.

According to an embodiment, the control module 1450 may perform control to determine a reference plane based on the folding angles of the display panels.

According to an embodiment, the control module 1450 may be configured to sense the user's gaze by using the sensing module 1410 and determine a reference plane based on the sensed gaze.

According to an embodiment, the control module 1450 may be configured to measure the occurrence coordinates of the touch input event by using the sensing module 1410 and determine a target panel on which the touch input event occurs based on the occurrence coordinates of the touch input event.

According to an embodiment, the control module 1450 may perform control to adjust the occurrence angle of the touch input event generated from the display panel based on the folding angles of the display panels.

According to an embodiment, the control module 1450 may determine a stroke generated by the touch input event based on the adjusted occurrence angle of the touch input event and control the display module 1430 to display the stroke.

The display module 1430 may display and output information processed in the electronic device 1400. The display module 1430 may display a stroke due to a touch input event transmitted from the control module 1450. The display module 1430 may further display a user interface for receiving a user input for controlling the electronic device 1400, and a user interface for setting a parameter related to an operation of receiving a touch input and an operation of transmitting a message to a receiving device.

The display module 1430 may include a touch screen having a layer structure with the touch input module 1420. In this case, the touch screen may perform functions of the touch input module 1420 and the display module 1430 and thus may be used as an input device in addition to an output device.

The display module 1430 may include at least two display panels, and the at least two display panels may be folded or unfolded about a folding axis.

The display module 1430 may include at least one of a liquid crystal display, a thin film transistor-liquid crystal display, an organic light-emitting diode, a flexible display, a three-dimensional (3D) display, and an electrophoretic display. The display module 1430 may include a translucent optical waveguide (e.g., a prism).

The communication module 1440 may communicate with an external electronic device or server. The communication module 1440 may receive a control signal for controlling the electronic device 1400 from an external electronic device, a signal indicating information about a state of the external electronic device, or the like. The communication module 1440 may transmit a control signal for controlling an electronic device, a signal indicating information about a state of the electronic device 1400, or the like to an external electronic device.

For example, the communication module 1440 may include at least one or a combination of a Bluetooth low energy (BLE) module, a Bluetooth module, a near field communication (NFC) module, a radio frequency (RF) module, and a mobile communication module.

An electronic device according to an embodiment may include at least one sensor, memory storing one or more instructions, a first panel, and a second panel, each of the first panel and the second panel may include a display foldable or unfoldable about a folding axis, and one or more processors, and the one or more processors may be configured to execute the one or more instructions to identify a folding angle of the display by using the at least one sensor, adjust an occurrence angle of a touch input event generated on the display when the display is in a folded state, determine a stroke generated by the touch input event according to the adjusted occurrence angle of the touch input event, and display the determined stroke on the display.

The one or more processors according to an embodiment may be further configured to determine whether the display is in a folded state based on the folding angle of the display.

The one or more processors according to an embodiment may be further configured to determine a reference plane based on the folding angle of the display, and the reference plane may represent a plane in which the first panel and the second panel are unfolded about the folding axis.

The one or more processors according to an embodiment may be further configured to sense a user's gaze by using the at least one sensor and determine a plane orthogonal to the user's gaze as a reference plane based on the user's gaze.

The one or more processors according to an embodiment may be further configured to identify occurrence coordinates of the touch input event by using the at least one sensor, and determine a target panel on which the touch input event is generated from among the first panel of the display and the second panel of the display based on the occurrence coordinates of the touch input event.

The one or more processors according to an embodiment may be further configured to calculate a compensation angle for the touch input event and adjust an occurrence angle of the touch input event by using the compensation angle.

The compensation angle according to an embodiment may be calculated based on at least one of an angle between an object that generates the touch input event and a surface of the target panel, a plane angle of the touch input event measured by determining the occurrence coordinates of the touch input event as an origin on a plane including the surface of the target panel, or a folding angle of the target panel.

The one or more processors according to an embodiment may be further configured to apply, to the compensation angle, a compensation ratio determined based on a folding angle of the display, and adjust an occurrence angle of the touch input event by using the compensation angle to which the compensation ratio is applied.

The display according to an embodiment may include an inward folding display in which the first panel and the second panel are folded inwardly about a folding axis, or an outward folding display in which the first panel and the second panel are folded outwardly about a folding axis.

The display according to an embodiment may include a multi-hinge display including a plurality of panels, and a reference plane of the multi-hinge display may be determined based on locations of hinges between the plurality of panels and a folding angle of each of the plurality of panels.

A method of operating an electronic device according to an embodiment may include identifying a folding angle of a display by using at least one sensor, adjusting an occurrence angle of a touch input event generated on the display when the display is in a folded state, determining a stroke generated by the touch input event according to the adjusted occurrence angle of the touch input event, and displaying the determined stroke on the display, and in this case, the display includes a first panel and a second panel, and the first panel and the second panel may be foldable or unfoldable about a folding axis.

The method according to an embodiment may further include determining whether the display is in a folded state based on a folding angle of the display.

The method according to an embodiment may further include determining a reference plane based on a folding angle of the display, and the reference plane may represent a plane in which the first panel and the second panel are in an unfolded state about the folding axis.

The one or more processors according to an embodiment may further include sensing a user's gaze by using the at least one sensor and determining a plane orthogonal to the user's gaze as a reference plane based on the user's gaze.

The method according to an embodiment may further include identifying occurrence coordinates of the touch input event by using the at least one sensor, and determining a target panel on which the touch input event is generated from among the first panel of the display and the second panel of the display based on the occurrence coordinates of the touch input event.

The method according to an embodiment may further include calculating a compensation angle for the touch input event, and adjusting an occurrence angle of the touch input event by using the compensation angle.

The compensation angle according to an embodiment may be calculated based on at least one of an angle between an object that generates the touch input event and a surface of the target panel, a plane angle of the touch input event measured by determining the occurrence coordinates of the touch input event as an origin on a plane including the surface of the target panel, or a folding angle of the target panel.

The method according to an embodiment may further include applying, to the compensation angle, a compensation ratio determined based on a folding angle of the display, adjusting an occurrence angle of the touch input event by using the compensation angle to which the compensation ratio is applied, and displaying a stroke of the touch input event on the display according to the adjusted occurrence angle of the touch input event.

The display according to an embodiment may include an inward folding display in which the first panel and the second panel are folded inwardly about a folding axis, an outward folding display in which the first panel and the second panel are folded outwardly about a folding axis, or a multi-hinge display including a plurality of panels, and a reference plane of the multi-hinge display may be determined based on locations of hinges between the plurality of panels and a folding angle of each of the plurality of panels.

The method of operating the electronic device described above according to an embodiment may be implemented in the form of a program command to be executed through various computer elements and recorded in a computer-readable medium. Embodiments of the present disclosure may also be implemented in the form of a recording medium including a computer-executable instruction, such as a program module executed by a computer. The computer-readable medium may be any available medium to be accessed by a computer and may include both volatile and nonvolatile media, and removable and non-removable media. The computer-readable medium may include a computer storage medium and a communication medium. A computer storage medium includes all of volatile and nonvolatile, removable and non-removable media implemented in any method or technology for storage of information such as computer-readable instructions, data structures, program modules or other data. The communication medium may typically include other data in a modulated data signal, such as computer readable instructions, data structures, or program modules.

The computer-readable medium may include a program command, a data file, and a data structure alone or in combination. The program commands recorded in the medium may be specially designed and configured for the present disclosure or be known and available to those skilled in the field of computer software. Examples of a computer-readable recording medium include magnetic media such as hard disks, floppy disks and magnetic tapes, optical media such as CD-ROMs and DVDs, magneto-optical media such as floptical disks, or hardware devices such as ROMs, RAMs and flash memories, which are specially configured to store and execute program commands. Examples of the program commands include a machine language code created by a compiler and a high-level language code executable by a computer using an interpreter and the like.

At least one of the method of operating the display device and the method of operating the electronic device according to the disclosed embodiments may be provided as included in a computer program product. The computer program product may be traded between sellers and buyers as commodities.

The computer program product may include a software program and a computer-readable storage medium having the software program stored thereon. For example, the computer program product may include a product in the form of a software program (e.g., a downloadable application) distributed electronically by a manufacturer of an electronic device or through an electronic marketplace (e.g., Google Play Store, and App Store). For electronic distribution, at least a portion of the software program may be stored on a storage medium or temporarily generated. In this case, the storage medium may be a storage medium of a server of a manufacturer, a server of an electronic market, or a relay server that temporarily stores software programs.

It will be appreciated by those skilled in the art to which the present disclosure belongs that the disclosure described above may be for illustrative purposes only and may be easily modified into other specific without altering its technical concepts or essential features of the present disclosure. Thus, it needs to be understood that the embodiments described above are exemplary and non-limiting in all respects.

The scope of the present disclosure is defined by the appended claims, rather than by the detailed description above.

## Claims

1. An electronic device comprising:
at least one sensor;
memory storing one or more instructions;
a display including a first panel (153-1) and a second panel (153-2), the first panel and the second panel being folded or unfolded about a folding axis (153-3); and
one or more processors, wherein the one or more processors are configured to execute the one or more instructions to identify a folding angle of the display by using the at least one sensor, adjust an occurrence angle of a touch input event generated on the display when the display is in a folded state, determine a stroke generated by the touch input event according to the adjusted occurrence angle of the touch input event, and display the determined stroke on the display.

2. The electronic device of claim 1, wherein the one or more processors are further configured to determine whether the display is in a folded state based on the folding angle of the display.

3. The electronic device of claim 1, wherein the one or more processors are further configured to determine a reference plane based on the folding angle of the display, and
the reference plane represents a plane in which the first panel and the second panel are unfolded about the folding axis.

4. The electronic device of claim 1, wherein the one or more processors are further configured to sense a user's gaze by using the at least one sensor, and determine a plane orthogonal to the user's gaze as a reference plane based on the user's gaze.

5. The electronic device of claim 3, wherein the one or more processors are further configured to identify occurrence coordinates of the touch input event by using the at least one sensor, and determine a target panel on which the touch input event is generated from among the first panel of the display and the second panel of the display based on the occurrence coordinates of the touch input event.

6. The electronic device of claim 5, wherein the one or more processors are further configured to calculate a compensation angle for the touch input event, and adjust the occurrence angle of the touch input event by using the compensation angle, and
the compensation angle is calculated based on at least one of an angle between an object that generates the touch input event and a surface of the target panel, a plane angle of the touch input event measured by determining the occurrence coordinates of the touch input event as an origin on a plane including the surface of the target panel, or a folding angle of the target panel.

7. The electronic device of claim 6, wherein the one or more processors are further configured to apply, to the compensation angle, a compensation ratio determined based on a folding angle of the display, and adjust the occurrence angle of the touch input event by using the compensation angle to which the compensation ratio is applied.

8. A method of operating an electronic device, the method comprising:
identifying (310) a folding angle of a display by using at least one sensor;
adjusting (330) an occurrence angle of a touch input event generated on the display when the display is in a folded state;
determining (340) a stroke generated by the touch input event according to the adjusted occurrence angle of the touch input event; and
displaying (350) the determined stroke on the display,
wherein the display includes a first panel (153-1) and a second panel (153-2), and the first panel and the second panel are folded or unfolded about a folding axis.

9. The method of claim 8, further comprising determining whether the display is in a folded state based on a folding angle of the display.

10. The method of claim 8, further comprising determining a reference plane based on the folding angle of the display,
wherein the reference plane represents a plane in which the first panel and the second panel are unfolded about the folding axis.

11. The method of claim 8, wherein the one or more processors further include
sensing a user's gaze by using the at least one sensor, and determining a plane orthogonal to the user's gaze as a reference plane based on the user's gaze.

12. The method of claim 10, further comprising:
identifying occurrence coordinates of the touch input event by using the at least one sensor; and
determining a target panel on which the touch input event is generated from among the first panel of the display and the second panel of the display based on the occurrence coordinates of the touch input event.

13. The method of claim 12, further comprising:
calculating a compensation angle for the touch input event; and
adjusting the occurrence angle of the touch input event by using the compensation angle,
wherein the compensation angle is calculated based on at least one of an angle between an object that generates the touch input event and a surface of the target panel, a plane angle of the touch input event measured by determining the occurrence coordinates of the touch input event as an origin on a plane including the surface of the target panel, or a folding angle of the target panel.

14. The method of claim 13, further comprising:
applying, to the compensation angle, a compensation ratio determined based on a folding angle of the display;
adjusting the occurrence angle of the touch input event by using the compensation angle to which the compensation ratio is applied; and
displaying a stroke of the touch input event on the display according to the adjusted occurrence angle of the touch input event.

15. A computer-readable recording medium having recorded thereon a program for performing the method of any one of claims 8 to 14 on a computer.

## Patentansprüche

1. Elektronische Vorrichtung, umfassend:
mindestens einen Sensor;
einen Speicher, der eine oder mehrere Anweisungen speichert;
eine Anzeige, die ein erstes Feld (153-1) und ein zweites Feld (153-2) beinhaltet, wobei das erste Feld und das zweite Feld um eine Klappachse (153-3) zusammengeklappt oder aufgeklappt sind; und
einen oder mehrere Prozessoren, wobei der eine oder die mehreren Prozessoren dazu konfiguriert sind, die eine oder mehreren Anweisungen auszuführen, um einen Klappwinkel der Anzeige durch Verwendung des mindestens einen Sensors zu identifizieren, einen Auftrittswinkel eines Berührungseingabeereignisses, das auf der Anzeige erzeugt wird, wenn sich die Anzeige in einem zusammengeklappten Zustand befindet, einzustellen, einen Anschlag, der durch das Berührungseingabeereignis erzeugt wird, gemäß dem eingestellten Auftrittswinkel des Berührungseingabeereignisses zu bestimmen und den bestimmten Anschlag auf der Anzeige anzuzeigen.

2. Elektronische Vorrichtung nach Anspruch 1, wobei der eine oder die mehreren Prozessoren ferner dazu konfiguriert sind, basierend auf dem Klappwinkel der Anzeige zu bestimmen, ob sich die Anzeige in einem zusammengeklappten Zustand befindet.

3. Elektronische Vorrichtung nach Anspruch 1, wobei der eine oder die mehreren Prozessoren ferner dazu konfiguriert sind, eine Referenzebene basierend auf dem Klappwinkel der Anzeige zu bestimmen, und
die Referenzebene eine Ebene darstellt, in der das erste Feld und das zweite Feld um die Klappachse aufgeklappt sind.

4. Elektronische Vorrichtung nach Anspruch 1, wobei der eine oder die mehreren Prozessoren ferner dazu konfiguriert sind, den Blick eines Benutzers durch Verwendung des mindestens einen Sensors zu erfassen und eine Ebene orthogonal zu dem Blick des Benutzers als eine Referenzebene basierend auf dem Blick des Benutzers zu bestimmen.

5. Elektronische Vorrichtung nach Anspruch 3, wobei der eine oder die mehreren Prozessoren ferner dazu konfiguriert sind, Auftrittskoordinaten des Berührungseingabeereignisses durch Verwendung des mindestens einen Sensors zu identifizieren und ein Zielfeld, auf dem das Berührungseingabeereignis erzeugt wird, aus dem ersten Feld der Anzeige und dem zweiten Feld der Anzeige basierend auf den Auftrittskoordinaten des Berührungseingabeereignisses zu bestimmen.

6. Elektronische Vorrichtung nach Anspruch 5, wobei der eine oder die mehreren Prozessoren ferner dazu konfiguriert sind, einen Kompensationswinkel für das Berührungseingabeereignis zu berechnen und den Auftrittswinkel des Berührungseingabeereignisses durch Verwendung des Kompensationswinkels einzustellen, und
der Kompensationswinkel basierend auf mindestens einem von einem Winkel zwischen einem Objekt, das das Berührungseingabeereignis erzeugt, und einer Oberfläche des Zielfelds, einem Ebenenwinkel des Berührungseingabeereignisses, der durch Bestimmen der Auftrittskoordinaten des Berührungseingabeereignisses als Ursprung auf einer Ebene, die die Oberfläche des Zielfelds beinhaltet, gemessen wird, oder einem Klappwinkel des Zielfelds berechnet wird.

7. Elektronische Vorrichtung nach Anspruch 6, wobei der eine oder die mehreren Prozessoren ferner dazu konfiguriert sind, auf den Kompensationswinkel ein Kompensationsverhältnis anzuwenden, das basierend auf einem Klappwinkel der Anzeige bestimmt wird, und den Auftrittswinkel des Berührungseingabeereignisses durch Verwendung des Kompensationswinkels, auf den das Kompensationsverhältnis angewendet wird, einzustellen.

8. Verfahren zum Betrieb einer elektronischen Vorrichtung, wobei das Verfahren Folgendes umfasst: Identifizieren (310) eines Klappwinkels einer Anzeige durch Verwendung mindestens eines Sensors;
Einstellen (330) eines Auftrittswinkels eines Berührungseingabeereignisses, das auf der Anzeige erzeugt wird, wenn sich die Anzeige in einem zusammengeklappten Zustand befindet;
Bestimmen (340) eines Anschlags, der durch das Berührungseingabeereignis erzeugt wird, gemäß dem eingestellten Auftrittswinkel des Berührungseingabeereignisses; und
Anzeigen (350) des bestimmten Anschlags auf der Anzeige,
wobei die Anzeige ein erstes Feld (153-1) und ein zweites Feld (153-2) beinhaltet und das erste Feld und das zweite Feld um eine Klappachse zusammengeklappt oder aufgeklappt sind.

9. Verfahren nach Anspruch 8, ferner umfassend das Bestimmen, ob sich die Anzeige in einem zusammengeklappten Zustand befindet, basierend auf einem Klappwinkel der Anzeige.

10. Verfahren nach Anspruch 8, ferner umfassend das Bestimmen einer Referenzebene basierend auf dem Klappwinkel der Anzeige,
wobei die Referenzebene eine Ebene darstellt, in der das erste Feld und das zweite Feld um die Klappachse aufgeklappt sind.

11. Verfahren nach Anspruch 8, wobei der eine oder die mehreren Prozessoren ferner das Erfassen des Blicks eines Benutzers durch Verwendung des mindestens einen Sensors und das Bestimmen einer Ebene orthogonal zu dem Blick des Benutzers als eine Referenzebene basierend auf dem Blick des Benutzers beinhalten.

12. Verfahren nach Anspruch 10, ferner umfassend:
Identifizieren von Auftrittskoordinaten des Berührungseingabeereignisses durch Verwendung des mindestens einen Sensors; und Bestimmen eines Zielfelds, auf dem das Berührungseingabeereignis erzeugt wird, aus dem ersten Feld der Anzeige und dem zweiten Feld der Anzeige basierend auf den Auftrittskoordinaten des Berührungseingabeereignisses.

13. Verfahren nach Anspruch 12, ferner umfassend:
Berechnen eines Kompensationswinkels für das Berührungseingabeereignis; und
Einstellen des Auftrittswinkels des Berührungseingabeereignisses durch Verwendung des Kompensationswinkels, wobei der Kompensationswinkel basierend auf mindestens einem von einem Winkel zwischen einem Objekt, das das Berührungseingabeereignis erzeugt, und einer Oberfläche des Zielfelds, einem Ebenenwinkel des Berührungseingabeereignisses, der durch Bestimmen der Auftrittskoordinaten des Berührungseingabeereignisses als Ursprung auf einer Ebene, die die Oberfläche des Zielfelds beinhaltet, gemessen wird, oder einem Klappwinkel des Zielfelds berechnet wird.

14. Verfahren nach Anspruch 13, ferner umfassend:
Anwenden eines Kompensationsverhältnisses, das basierend auf einem Klappwinkel der Anzeige bestimmt wird, auf den Kompensationswinkel;
Einstellen des Auftrittswinkels des Berührungseingabeereignisses durch Verwendung des Kompensationswinkels, auf den das Kompensationsverhältnis angewendet wird; und
Anzeigen eines Anschlags des Berührungseingabeereignisses auf der Anzeige gemäß dem eingestellten Auftrittswinkel des Berührungseingabeereignisses.

15. Computerlesbares Aufzeichnungsmedium, auf dem ein Programm zum Durchführen des Verfahrens nach einem der Ansprüche 8 bis 14 auf einem Computer aufgezeichnet ist.

## Revendications

1. Dispositif électronique comprenant :
au moins un capteur ;
une mémoire stockant une ou plusieurs instructions ;
un affichage comprenant un premier panneau (153-1) et un second panneau (153-2), le premier panneau et le second panneau étant pliés ou dépliés autour d'un axe de pliage (153-3) ; et
un ou plusieurs processeurs, dans lequel l'un ou plusieurs processeurs sont configurés pour exécuter l'une ou plusieurs instructions pour identifier un angle de pliage de l'affichage en utilisant l'au moins un capteur, ajuster un angle d'occurrence d'un événement d'entrée tactile généré sur l'affichage lorsque l'affichage est dans un état plié, déterminer un tracé généré par l'événement d'entrée tactile en fonction de l'angle d'occurrence ajusté de l'événement d'entrée tactile, et afficher le tracé déterminé sur l'affichage.

2. Dispositif électronique selon la revendication 1, dans lequel l'un ou plusieurs processeurs sont en outre configurés pour déterminer si l'affichage est dans un état plié sur la base de l'angle de pliage de l'affichage.

3. Dispositif électronique selon la revendication 1, dans lequel l'un ou plusieurs processeurs sont en outre configurés pour déterminer un plan de référence sur la base de l'angle de pliage de l'affichage, et
le plan de référence représente un plan dans lequel le premier panneau et le second panneau sont dépliés autour de l'axe de pliage.

4. Dispositif électronique selon la revendication 1, dans lequel l'un ou plusieurs processeurs sont en outre configurés pour détecter le regard d'un utilisateur en utilisant l'au moins un capteur, et déterminer un plan orthogonal au regard de l'utilisateur en tant que plan de référence sur la base du regard de l'utilisateur.

5. Dispositif électronique selon la revendication 3, dans lequel l'un ou plusieurs processeurs sont en outre configurés pour identifier des coordonnées d'occurrence de l'événement d'entrée tactile en utilisant l'au moins un capteur, et déterminer un panneau cible sur lequel l'événement d'entrée tactile est généré parmi le premier panneau de l'affichage et le second panneau de l'affichage sur la base des coordonnées d'occurrence de l'événement d'entrée tactile.

6. Dispositif électronique selon la revendication 5, dans lequel l'un ou plusieurs processeurs sont en outre configurés pour calculer un angle de compensation pour l'événement d'entrée tactile, et ajuster l'angle d'occurrence de l'événement d'entrée tactile en utilisant l'angle de compensation, et
l'angle de compensation est calculé sur la base d'au moins l'un d'un angle entre un objet qui génère l'événement d'entrée tactile et une surface du panneau cible, d'un angle de plan de l'événement d'entrée tactile mesuré en déterminant les coordonnées d'occurrence de l'événement d'entrée tactile en tant qu'origine sur un plan comprenant la surface du panneau cible, ou d'un angle de pliage du panneau cible.

7. Dispositif électronique selon la revendication 6, dans lequel l'un ou plusieurs processeurs sont en outre configurés pour appliquer, à l'angle de compensation, un rapport de compensation déterminé sur la base d'un angle de pliage de l'affichage, et ajuster l'angle d'occurrence de l'événement d'entrée tactile en utilisant l'angle de compensation auquel le rapport de compensation est appliqué.

8. Procédé de fonctionnement d'un dispositif électronique, le procédé comprenant :
l'identification (310) d'un angle de pliage d'un affichage en utilisant au moins un capteur ;
l'ajustement (330) d'un angle d'occurrence d'un événement d'entrée tactile généré sur l'affichage lorsque l'affichage est dans un état plié ;
la détermination (340) d'un tracé généré par l'événement d'entrée tactile en fonction de l'angle d'occurrence ajusté de l'événement d'entrée tactile ; et
l'affichage (350) du tracé déterminé sur l'affichage,
dans lequel l'affichage comprend un premier panneau (153-1) et un second panneau (153-2), et le premier panneau et le second panneau sont pliés ou dépliés autour d'un axe de pliage.

9. Procédé selon la revendication 8, comprenant en outre la détermination si l'affichage est dans un état plié sur la base d'un angle de pliage de l'affichage.

10. Procédé selon la revendication 8, comprenant en outre la détermination d'un plan de référence sur la base de l'angle de pliage de l'affichage,
dans lequel le plan de référence représente un plan dans lequel le premier panneau et le second panneau sont dépliés autour de l'axe de pliage.

11. Procédé selon la revendication 8, dans lequel l'un ou plusieurs processeurs comprennent en outre
la détection du regard d'un utilisateur en utilisant l'au moins un capteur, et
la détermination d'un plan orthogonal au regard de l'utilisateur en tant que plan de référence sur la base du regard de l'utilisateur.

12. Procédé selon la revendication 10, comprenant en outre :
l'identification des coordonnées d'occurrence de l'événement d'entrée tactile en utilisant l'au moins un capteur ; et
la détermination d'un panneau cible sur lequel l'événement d'entrée tactile est généré parmi le premier panneau de l'affichage et le second panneau de l'affichage sur la base des coordonnées d'occurrence de l'événement d'entrée tactile.

13. Procédé selon la revendication 12, comprenant en outre :
le calcul d'un angle de compensation pour l'événement d'entrée tactile ; et
l'ajustement de l'angle d'occurrence de l'événement d'entrée tactile en utilisant l'angle de compensation,
dans lequel l'angle de compensation est calculé sur la base d'au moins l'un d'un angle entre un objet qui génère l'événement d'entrée tactile et une surface du panneau cible, d'un angle de plan de l'événement d'entrée tactile mesuré en déterminant les coordonnées d'occurrence de l'événement d'entrée tactile en tant qu'origine sur un plan comprenant la surface du panneau cible, ou d'un angle de pliage du panneau cible.

14. Procédé selon la revendication 13, comprenant en outre :
l'application, à l'angle de compensation, d'un rapport de compensation déterminé sur la base d'un angle de pliage de l'affichage ;
l'ajustement de l'angle d'occurrence de l'événement d'entrée tactile en utilisant l'angle de compensation auquel le rapport de compensation est appliqué ; et
l'affichage d'un tracé de l'événement d'entrée tactile sur l'affichage en fonction de l'angle d'occurrence ajusté de l'événement d'entrée tactile.

15. Support d'enregistrement lisible par ordinateur sur lequel est enregistré un programme destiné à exécuter le procédé selon l'une quelconque des revendications 8 à 14, sur un ordinateur.
